# EUROPEAN PATENT APPLICATION

(11) **EP 3 723 260 A1**
(43) Date of publication of application: **14.10.2020**
(21) Application number: 19169034.6
(22) Date of filing: 12.04.2019
(51) Int. Cl.: H02M 7/00

(54) **PLUG-IN CONVERTER**

(71) Applicant: TenneT TSO GmbH, 95448 Bayreuth (DE)
(72) Inventor: Lebioda, Thomas Jan, 95445 Bayreuth (DE); van Schijndel, Arjan, 95511 Mistelbach (DE); Koreman, Cornelis Govert Antonius, 6852 BL Huissen (NL)
(74) Representative: Scheffler, Jörg

(57) **Abstract**

A plug-in converter for coupling an AC grid section and a DC grid section of a grid system is provided. The plug-in converter (100) comprises a first interface (101) coupled to the AC grid section and a second interface (102) coupled to the DC grid section. The plug-in converter furthermore comprises a converter unit for converting AC in DC voltage or DC in AC voltage. The converter unit comprises a plurality of converter branches (110) (in particular two branches for each AC phase) each having at least two branch modules (120) coupled in series. Each branch module (120) comprises at least one power module (120) having at least one controllable voltage source and at least one impedance (122). Each branch module (120) is arranged in a common first housing (400), in particular a container. Each power module (120) is arranged in a second housing (410), in particular an isolated housing, which is arranged within the common housing (400). As each branch module is arranged in a common housing like a container, such a branch module can be easily exchanged if a fault has occurred within the branch module and can be replaced by a new branch module. The faulty branch module can then be tested and repaired within the factory.

## Description

### Field of the invention

The present invention relates to a plug-in converter for exchanging power between an AC grid section and a DC grid section.

### Background of the invention

A high voltage direct current HVDC converter is used to transfer or exchange energy between an AC part and a DC part of the network. The HVDC converter can either be a line-commutated converter or a voltage-source converter.

A plug-in converter is a converter which has a compact size and which can be introduced into a grid system in order to exchange power between an AC and a DC section of the grid system. Hence, the plug-in converter can transfer power between an AC grid section and a DC grid section.

### Summary of the invention

It is an object of the invention to provide a plug-in converter which allows a more efficient exchange of power between an AC to DC section of a grid system.

This object is solved by a plug-in converter for exchanging power between an AC grid section and a DC grid section of a grid system according to claim 1.

Thus, a plug-in converter for coupling an AC grid section and a DC grid section of a grid system is provided. The plug-in converter comprises a first interface coupled to the AC grid section and a second interface coupled to the DC grid section. The plug-in converter furthermore comprises a converter unit for converting AC in DC voltage or DC in AC voltage. The converter unit comprises a plurality of converter branches (in particular two branches for each AC phase) each having at least two branch modules coupled in series. Each branch module comprises at least one power module having at least one controllable voltage source and at least one impedance. Each branch module is arranged in a common first housing, in particular a container. Each power module is arranged in a second housing, in particular an isolated housing, which is arranged within the common housing. As each branch module is arranged in a common housing like a container, such a branch module can be easily exchanged if a fault has occurred within the branch module and can be replaced by a new branch module. The faulty branch module can then be tested and repaired within the factory.

The plug-in converter is used to transfer energy between the AC grid section and a DC grid section of the grid system. The control of the plug-in converter can be performed from the AC grid section and from the DC grid section. The plug-in converter can also be used to control the exchange of power between the AC grid section and the DC grid section.

According to an aspect of the invention, at least one power module of a converter branch is housed in a second housing (like a tank). An electrical connection topology of all power modules of the branches remains unchanged with the arrangement of the power modules in the second housings (tank). A division of the power modules into the housing can be performed to enable an arrangement in the common housing. Furthermore, the division of the power modules is freely selectable.

According to an aspect of the invention, the second housing is embodied as in insulated housing enabling an electrically, mechanically and thermally isolation from the environment.

According to an aspect of the invention, each converter branch comprises a voltage source which may comprise at least one power module in form of a voltage source converter or a line-commutated converter. Each branch voltage source can be further divided into a number of sub-voltage sources which may be arranged in parallel or in series. Each sub-voltage source may comprise a power module. According to the invention, a voltage source of a converter branch can thus be divided into sub-voltage sources which can be arranged in a first and/or second housing.

Thus, the plug-in converter can be easily and effectively repaired and maintained.

According to an aspect of the invention, the above described plug-in converter can be used in a grid system to couple an AC section and a DC section.

Further aspects of the invention are defined in the dependent claims.

Embodiments and advantages of the invention are elucidated with reference to the figures.
- Fig. 1: shows a schematic representation of a grid system according to an aspect of the invention,
- Fig. 2A: each show a schematic circuit diagram of a converter in a plug-in
- and 2B: converter,
- Fig. 3: shows a representation of part of the converter of Fig. 2,
- Fig. 4: shows a schematic representation of a branch module housing, and
- Fig. 5: shows a schematic representation of a converter control system according to an embodiment of the invention.

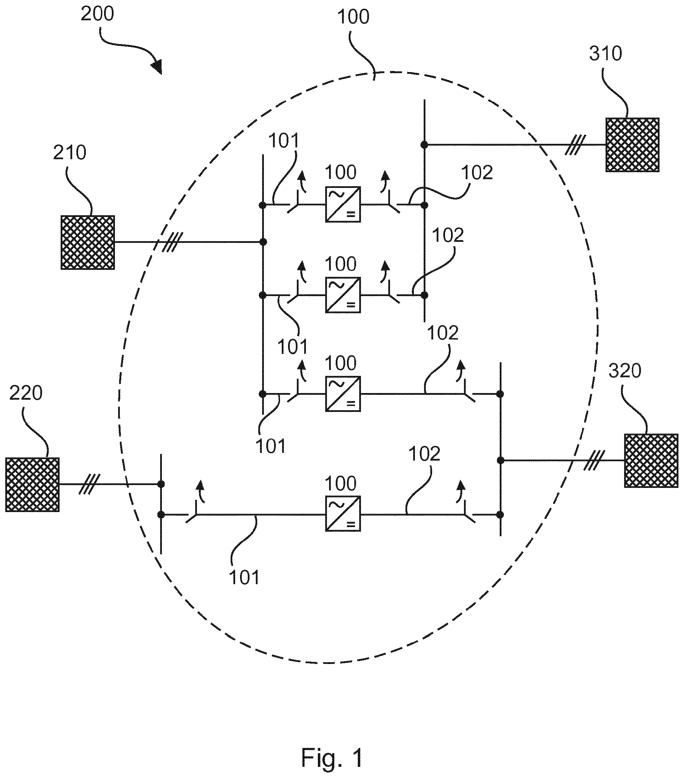

Fig. 1 shows a schematic representation of a grid system according to an aspect of the invention. The grid system comprises a first and second AC grid 210, 220 and a first and second DC grid 310, 320 which are coupled by a number of plug-in converters 100. The plug-in converter is used as a universal couple element between the AC grid section and the DC grid section. The plug-in converters 100 have a first and second interface 101, 102 for coupling to the AC grid section 200 and the DC grid section 300. The plug-in converters 100 can be arranged in parallel as shown between the AC grid section 210 and the DC grid section 330. Moreover, three plug-in converters can be used for coupling the AC grid section 210 to the first and second DC grid section 310, 320. Moreover, one plug-in converter 100 can be coupled between the first AC grid section 110 and the second DC grid section 320 and a further plug-in converter 100 can be coupled between the second AC grid section 220 and the second DC grid section 330. Accordingly, a great number of topologies are available in order to transfer energy between the AC grid section and the DC grid section or vice versa.

The plug-in converter can be a multi-module converter MMC and a voltage source controlled VSC converter. Each branch module can have a voltage source.

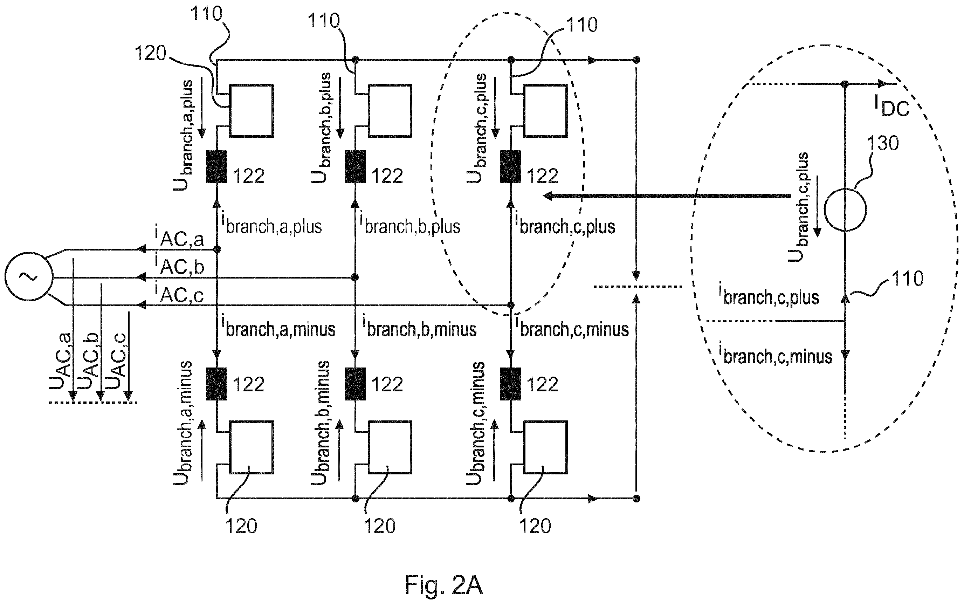

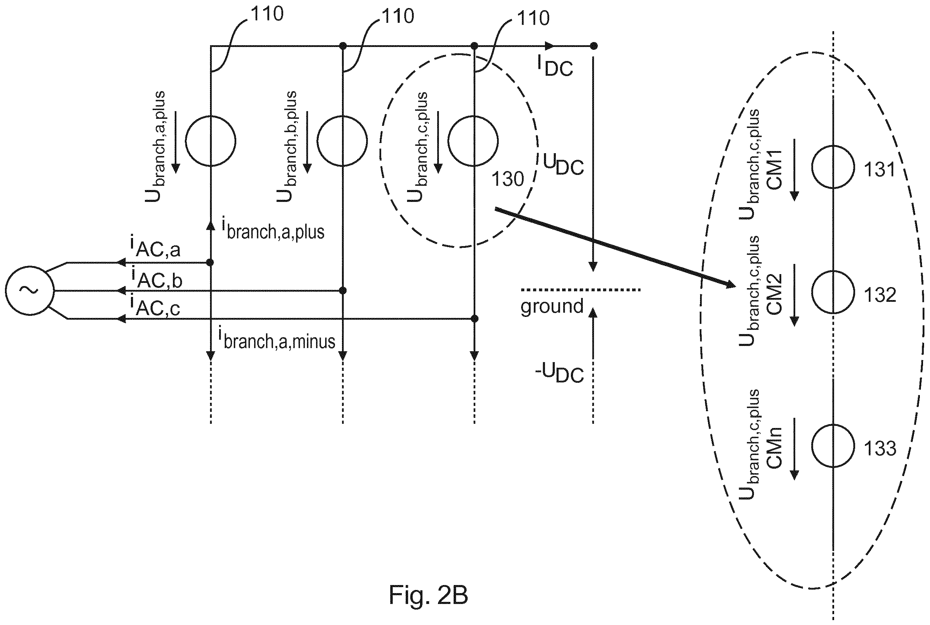

Fig. 2A and 2B each show a schematic circuit diagram of a converter in a plug-in converter. In Fig. 2A and 2B, the division of the voltage source into sub-voltage sources and an implementation of the sub-voltage sources as power modules are disclosed. The plug-in converter 100 comprises three branches 110 which each comprise at least one power module 120 and an inductance 122. One branch 110 as shown in Fig. 2 comprises two branch modules 130 each having a power module 120 and an inductance 122. In each branch 110, at least one branch module 130 can be provided. Optionally, more than one branch module 131 - 133 can be provided coupled in series as shown in Fig. 2B.

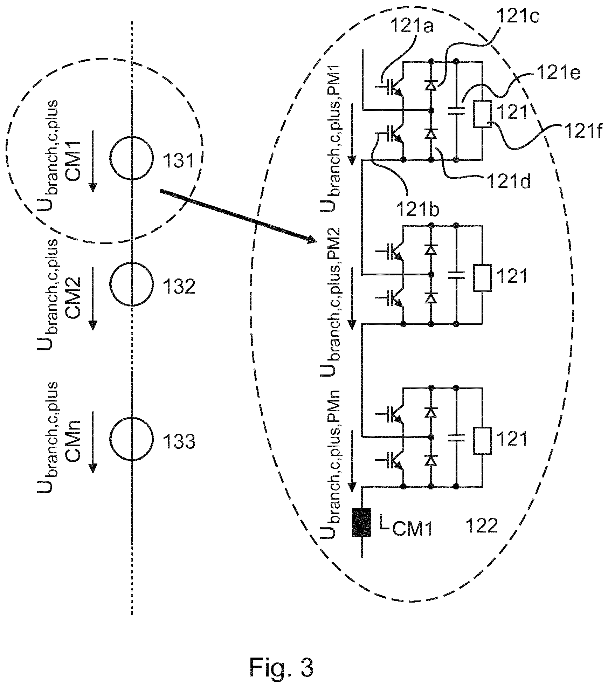

Fig. 3 shows a representation of part of the converter of Fig. 2. Each branch module 131 - 133 can be split into a number of independent power modules 120 which are coupled in series. Each power module 120 can have two electronic switches 121a, 121b, two diodes 121c, 121d, a capacitor 121e and an inductance 121f. In other words, each converter branch can be divided into a number of branch modules (each branch module can comprise at least one sub-voltage source which comprises of at least one power module) which in turn can be divided into a number of power modules and an inductance 121. Thus, the function of the plug-in converter can be subdivided into a number of power modules and an associated inductance.

According to an aspect of the invention, each power module can be arranged in a dedicated container or tank. Each sub-voltage source can be arranged in a container. Each sub-voltage source may comprise at least one power module and optionally a part of the impedance. A number of power module containers can be arranged within a common housing (like a container) of a branch module. In other words, the plug-in converter may comprise a number of branch module housings which in turn comprise a number of power module housings.

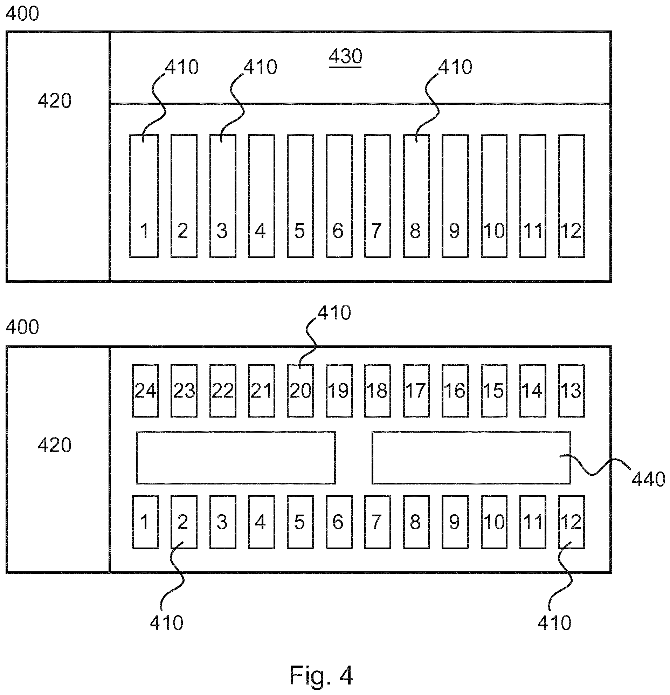

Fig. 4 shows a schematic representation of a branch module housing. The branch module housing can be embodied as a container, preferably a standard size ISO container 400. The container 400 in turn comprises a number of power module housings 410 which can be implemented as isolated housings or tanks 410. In the container of Fig. 4, as an example 24 power module housings 410 can be provided. Furthermore, the container 400 comprises feed-throughs 420 which are used for feeding through voltages, data signals and cooling for the container. Moreover, additional equipment 430 for example in form of heat exchangers, measuring instruments, dielectric expansion chambers etc. can be provided. Furthermore, an inductive impedance 440 can be provided in the container. Accordingly, each branch module can be implemented in a container which in itself may further comprise a number of isolated tanks 410 which each comprise at least one power module.

The implementation of the branch modules as a container is advantageous if a fault occurs within such a container. If this occurs, then the entire container may be replaced with a new container and the faulty container can be serviced in the factory. This is advantageous as a downtime of the plug-in converter can be significantly reduced. It is furthermore advantageous for the service workers to be able to service the branch module in a controlled environment like a factory plant than in an outside area like an offshore wind farm.

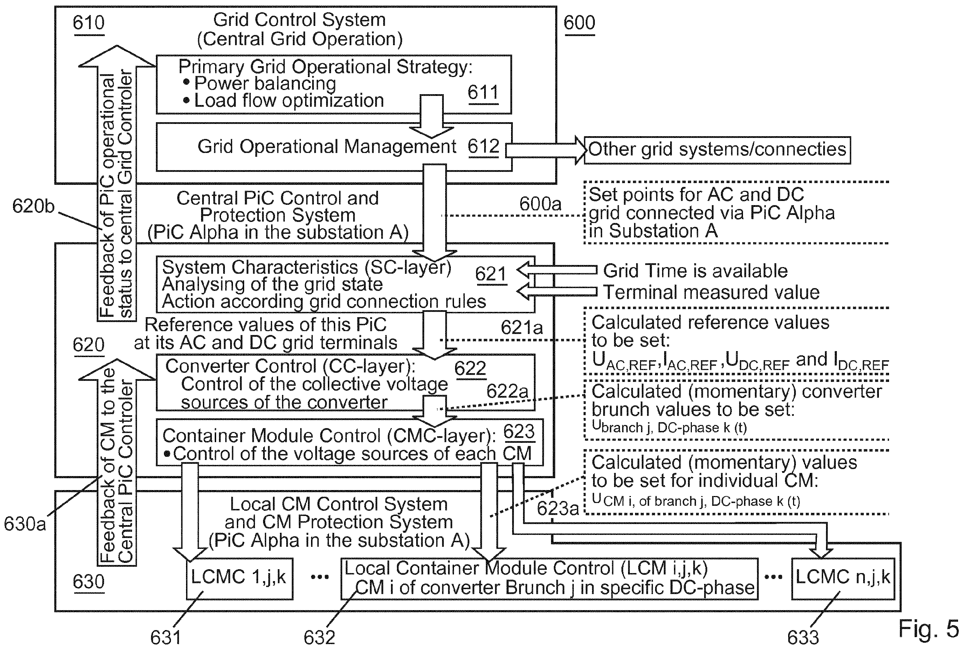

Fig. 5 shows a schematic representation of a converter control system according to an embodiment of the invention. The converter control system 600 comprises a central grid operating system 610, a central converter control and protection system 620 and a local branch module control and protection system. The central grid operating system 610 comprises a primary grid operating system unit 611 for power balancing and load flow optimization. Furthermore, a grid operational management unit 612 is provided which can be coupled to other grid systems or connections. The output of the central grid operating system 610 corresponds to set points of the AC and grid interface of at least one plug-in converter.

The central terminal device control system 620 receives the set points for the AC and DC interfaces. The system characteristics unit 621 receives the set points for the AC and DC grid sections, grid time if available and the measured terminal values and analyses the grid state and generates action according to the grid connection rules. In particular, the system characteristic unit 621 calculates reference values which are forwarded to the voltage controlled converters. In the converter control unit 622, a control of the collected voltage sources of the plug-in converter is performed based on the calculated reference value from the system characteristic unit 621. Thus, the converter control unit 622 calculates the set values of the voltages in the branches of the converter.

In the branch module control unit 623, a control of the voltage sources of each branch module is performed based on the calculated branch values. The output of the branch module control unit 623 are the set values for the individual branch modules. The central terminal device control system 620 sends a feedback system to the central grid operating system 610 which includes a feedback of the operation status of the plug-in converter.

The local branch module control units 630 comprise a plurality of local branch control units 631 - 633. In the local branch module control units 631 - 633 are part of the branch module and are used to control the power units in each branch module. Furthermore, the local branch module control unit 630 and the individual local branch module control unit 631 - 633 gives a feedback of the individual branch modules to the central terminal device control system 620.

As the converter control system according to the invention is divided into different layers, this allows a high degree of modularity, flexibility and functionality within the different parts of the plug-in converter. As all the modules of the grid control system can be adapted independently, the functionality of the control system can be improved by predefined interface functionality.

Preferably, the local branch module control unit 630 only depends on the external function parameters of the terminals of the branch modules. Hence, a branch module can be exchanged without any problem.

## Claims

1. Plug-in converter (100) for exchanging power between an AC grid section and a DC grid section of a grid system, comprising:
a first interface (101) coupled to an AC grid section,
a second interface (102) coupled to a DC grid section,
a converter unit for converting AC in DC or DC in AC having a plurality of converter branches (110) each having at least two branch modules (120) coupled in series,
wherein each branch module (120) comprises at least one power module (120) having at least one controllable voltage source and at least one impedance (122),
wherein each branch module (120) is arranged in at least one common first housing (400), in particular a container,
wherein each power module (121) is arranged in a second housing (410), in particular an isolated housing or tank, arranged within the at least one common first housing.

2. Plug-in converter according to claim 1, wherein
each power module (120) comprises at least two electronic switches in series, at least two diodes in series and at least a capacitor and at least a resistor in parallel.

3. Plug-in converter according to any one of the claims 1 or 2, wherein
the converter unit is a voltage source controlled modular multi-mode converter (MMC).

4. Plug-in converter according to any one of the claim 1 to 3, wherein
the common first housing (400) of the branch module (120) is at least partially electrically, mechanically, chemically and/or thermally isolated from the outside.

5. Grid system, having
at least one AC section, at least one DC section and at least one plug-in converter according to one of the claim 1to 3 coupling an AC section and a DC section.

6. Terminal device for coupling an AC grid section and a DC grid section of a grid system, comprising
at least one plug-in converter according to any one of the claim 1 to 3.

7. Converter Control system (600), wherein a grid system comprises at least one AC section, at least one DC section and at least one plug-in converter according to any one of the claims 1 to 3 coupling an AC section and a DC section, comprising
a central grid operation system (610) implementing a primary grid operation strategy,
a central terminal device control system (620) coupled to the central grid operation system (610) for controlling a plug-in converter and having a system characteristic unit (621) for analyzing grid states and for initiating grid actions based on predefined grid connection rules, a converter control unit (622) for collectively controlling voltage sources of the at least one plug-in converter, and a branch module control unit (623) for controlling the voltage source of each branch module, and
a local branch module control unit (630) for controlling the branch modules (130).
